# Europäisches Patentamt

# European Patent Office

# Office européen des brevets

(19)

(11) Veröffentlichungsnummer: **0 231 509**

**B1**

(12)

# EUROPÄISCHE PATENTSCHRIFT

(45) Veröffentlichungstag der Patentschrift:
**19.04.89**

(21) Anmeldenummer: **86117969.5**

(22) Anmeldetag: **23.12.86**

(51) Int. Cl.⁴: **C 07 C 119/055,** C 07 D 229/00,
C 08 G 18/79, C 08 G 18/80,
C 03 C 25/02, H 01 B 3/30

(54) **Verfahren zur Herstellung von Carbodiimidgruppen enthaltenden, blockierten Polyisocyanaten, und deren Verwendung zur Herstellung von Drahtlackierungen.**

(30) Priorität: **14.01.86 DE 3600766**

(43) Veröffentlichungstag der Anmeldung:
**12.08.87 Patentblatt 87/33**

(45) Bekanntmachung des Hinweises auf die Patenterteilung:
**19.04.89 Patentblatt 89/16**

(84) Benannte Vertragsstaaten:
**AT CH DE ES FR GB IT LI NL SE**

(56) Entgegenhaltungen:
**EP-A-0 005 230**
**EP-A-0 023 626**
**DE-A-1 546 922**
**FR-A-1 168 071**
**US-A-2 941 983**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Dünwald, Willi, Dr., Geschwister- Scholl-Strasse 15, D-5090 Leverkusen 1 (DE)**
Erfinder: **Halpaap, Reinhard, Dr., Kleinfeldchensweg 37b, D-5000 Köln 91 (DE)**
Erfinder: **Pedain, Josef, Dr., Haferkamp 6, D-5000 Köln 80 (DE)**

EP 0 231 509 B1

LIBER, STOCKHOLM 1989

**Beschreibung**

Die vorliegende Erfindung betrifft ein neues Verfahren zur Herstellung von Carbodiimidgruppen aufweisenden, blockierten Polyisocyanaten durch zumindest teilweise Carbodiimidisierung der freien Isocyanatgruppen von teilblockierten organischen Polyisocyanaten und ihre Verwendung zur Herstellung von Drahtlackierungen.

Blockierte Isocyanate und ihre Verwendung als Isocyanatkomponente, d. h. als Vernetzer für Einbrennlacke, sind seit langem bekannt (vgl. z. B. Houben-Weyl, Methoden der organischen Chemie, Bd. XIV/2, Seiten 61 - 70). Die blockierten Isocyanate ermöglichen die Herstellung von Einbrennlacken, die bei Raumtemperatur und leicht erhöhten Temperaturen lagerstabil sind und erst bei höheren Temperaturen, wie sie in Einbrennöfen vorherrschen, vernetzen.

Es ist außerdem bekannt, daß organische Isocyanate in Anwesenheit von geeigneten, beispielsweise phosphorhaltigen Katalysatoren unter Abspaltung von Kohlendioxid Carbodiimidstrukturen ausbilden (vgl. z. B. US-PS 2 941 966). Die so erhaltenen, Carbodiimidgruppen aufweisenden Diisocyanate sind in der Regel in organischen Lösungsmitteln schwer löslich, wie beispielsweise der DE-DS 2 436 741 zu entnehmen ist.

Es wurde jetzt überraschenderweise gefunden, daß es möglich ist, Carbodiimidgruppen aufweisende Polyisocyanate mit guter Löslichkeit in organischen Lösungsmitteln zu erhalten, wenn vor der Carbodiimidisierung eine partielle Blockierung der Isocyanatgruppen der Ausganspolyisocyanate vorgenommen wird. Diese Löslichkeit ist überraschenderweise auch im Falle von Lösungsmitteln mit phenolischen Hydroxylgruppen wie beispielsweise Phenol, Kresol oder Xylenol gegeben, obwohl derartige Phenole bekanntlich gegenüber Carbodiimidgruppen nicht inert sind.

Wie außerdem festgestellt wurde, stellen die nachstehend näher beschriebenen, sowohl Carbodiimid- als auch blockierte Isocyanatgruppen aufweisenden erfindungsgemäßen Verfahrensprodukte ganz besonders gut geeignete Polyisocyanate für Einbrennlacke, insbesondere für die Drahtlackierung, auf Basis von organischen Polyisocyanaten mit blockierten Isocyanatgruppen und organischen Verbindungen mit gegenüber Isocyanatgruppen reaktionsfähigen Gruppen dar. Einerseits gestatten die erfindungsgemäßen Verfahrensprodukte die Herstellung von Drahtlacken, mit denen besonders hohe Lackiergeschwindigkeiten erzielt werden können, und andererseits ist es möglich, unter Verwendung der erfindungsgemäßen Verfahrensprodukte sowohl verzinnbare als auch nicht verzinnbare, d. h. schmorbeständige Drahtlackierungen herzustellen. Dies ist darauf zurückzuführen, daß je nach Art des verwendeten Reaktionspartners für die erfindungsgemäßen, blockierten Polyisocyanate und in Abhängigkeit von der zur Anwendung gelangenden Katalyse nicht nur die blockierten Isocyanatgruppen sondern auch die Carbodiimidgruppen an der Vernetzungsreaktion teilhaben. So ist es beispielsweise möglich, bei Verwendung von Carboxylgruppen aufweisenden Reaktionspartnern unter gleichzeitiger Verwendung eines geeigneten, metallhaltigen Katalysators die Carbodiimidgruppen in die Vernetzungsreaktion einzubeziehen, während bei Verwendung von vorwiegend Hydroxylgruppen aufweisenden Reaktionspartner in Abwesenheit von derartigen Katalysatoren lediglich die klassische Reaktion zwischen Hydroxylgruppen und blockierten Isocyanatgruppen abläuft. Im ersten Falle können schmorbeständige, im zweiten Falle verzinnbare Drahtlackierungen erhalten werden. Im Falle des Vorliegens von Uretonimingruppen (entstanden durch Anlagerung von Isocyanat- an Carbodiimidgruppen) reagieren die in diesen vorliegenden Isocyanatgruppen wie blockierte Isocyanatgruppen, während die entsprechenden Carbodiimidgruppen bezüglich ihres Reaktionsverhaltens den freien Carbodiimidgruppen entsprechen.

Gegenstand der Erfindung ist ein Verfahren zur Herstellung von (i) Carbodiimid- und/oder Uretonimingruppen und (ii) blockierte Isocyanatgruppen aufweisenden, organischen Verbindungen, dadurch gekennzeichnet, daß man die Isocyanatgruppen eines organischen Polyisocyanats eines Molekulargewichts von 174 - 1 000 mit ausschließlich aromatisch-gebundenen Isocyanatgruppen zu 30 - 70 % durch Reaktion mit einem monofunktionellem Blockierungsmittel für Isocyanatgruppen blockiert und anschließend die noch verbleibenden freien Isocyanatgruppen zu 65 bis 100 % unter Kohlendioxidabspaltung in Carbodiimidgruppen überführt.

Gegenstand der Erfindung ist auch die Verwendung der so erhältlichen (i) Carbodiimid- und/oder Uretonimingruppen und (ii) blockierte Isocyanatgruppen aufweisenden Verbindungen in Kombination mit gegenüber Isocyanatgruppen reaktionsfähigen Gruppen zur Herstellung von Drahtlackierungen.

Für das erfindungsgemäße Verfahren geeignete Polyisocyanate sind solche des Molekulargewichtsbereichs von 174 bis 1.000 mit ausschließlich aromatisch gebundenen Isocyanatgruppen, insbesondere die entsprechenden, technisch leicht zugänglichen aromatischen Polyisocyanate, wie 2,4-Diisocyanatotoluol, dessen technischen Gemischen mit 2,6-Diisocyanatotoluol, 4,4'-Diisocyanatodiphenylmethan, dessen technischen Gemische mit 2,4'- und gegebenenfalls 2,2'-Diisocyanatodiphenylmethan oder auch die technischen Gemische dieser Isomeren mit ihren höheren Homologen, wie sie durch Anilin-Formaldehyd-Kondensation und anschließender Phosgenierung hergestellt werden. Beliebige Gemische derartiger Polyisocyate können selbstverständlich ebenfalls eingesetzt werden. Ganz besonders bevorzugt werden die zuletzt genannten aromatischen Diisocyanate bzw. deren Gemische verwendet.

Geeignete Blockierungsmittel sind beliebige monofunktionelle Blockierungsmittel der an sich bekannten Art. Hierzu gehören Phenole eines zwischen 94 und 318 liegenden Molekulargewichts wie Phenol, die isomeren Kresole, die isomeren Xylenole oder deren technischen Gemische; einwertige Alkohole des Molekulargewichtsbereichs 32 bis 250 wie Methanol, Ethanol, n-Propanol, n-Octanol, Benzylalkohol, 2-

2

Phenylethanol, Cyclopentanol, Cyclohexanol, 2-Methoxyethanol, 2-Ethoxyethanol, Diethylenglykolmonomethylether oder Diethylenglykolmonoethylether; aliphatische, cycloaliphatische oder araliphatische Monooxime des Molekulargewichtsbereichs 73 bis 325, vorzugsweise 73 bis 141 wie z. B. Acetonoxim, Butanonoxim, 3-Methylbutanonoxim, 3,3-Dimethylbutanonoxim, 2- und 3-Pentanonoxim, 4-Methyl-2-pentanonoxim, Cyclopentanonoxim, 2,2,4(2,4,4)-Trimethylcyclopentanonoxim, Cyclohexanonoxim, Acetophenonoxim, insbesondere Butanonoxim; Lactame wie beispielsweise Pyrrolidon und insbesondere C-Caprolactam oder CH-aktive Blockierungsmittel wie Malonsäurediethylester oder Acetessigsäureethylester. Beliebige Gemische der beispielhaft genannten Blockierungsmittel können ebenfalls eingesetzt werden. Besonders bevorzugt werden die genannten phenolischen Blockierungsmittel, insbesondere die beispielhaft genannten isomeren Kresole und Xylenole und/oder Diethylenglykolmonoethylether oder -monomethylether als Blockierungsmittel verwendet.

Der erste Schritt des erfindungsgemäßen Verfahrens besteht nun darin, daß man 30 bis 70 % der Isocyanatgruppen des Ausgangspolyisocyanats in an sich bekannter Weise mit Blockierungsmitteln der beispielhaft genannten Art blockiert. Hierbei wird die Teilblockierung der Ausgangspolyisocyanate im allgemeinen so durchgeführt, daß die teilblockierten Polyisocyanate im statistischen Mittel eine NCO-Funktionalität von 0,6 bis 1,4, aufweisen.

Der erste Schritt des erfindungsgemäßen Verfahrens wird im allgemeinen bei Temperaturen von 0 bis 250° C, vorzugsweise 20 bis 180°C, durchgeführt. Die Vereinigung der Reaktionspartner kann hierbei beispielsweise bei Raumtemperatur erfolgen, worauf sich die exotherme Reaktion gegebenenfalls unter gleichzeitiger Erhitzung auf bis zu 250°C, vorzugsweise bis zu 180°C, insbesondere 60 bis 150°C, liegende Temperaturen anschließt. Das Ende der Umsetzung kann am Abklingen der Wärmetönung oder durch Titration des Rest-NCO-Gehalts erkannt werden. Die Blockierungsreaktion kann sowohl lösungsmittelfrei als auch in Gegenwart von inerten Lösungsmitteln durchgeführt werden. Vorzugsweise erfolgt die Blockierung ohne Mitverwendung von Lösungsmitteln.

Die so erhaltenen teilblockierten Polyisocyanate werden in einem zweiten Reaktionsschritt im allgemeinen bei Temperaturen von 0 bis 200°C, vorzugsweise von 20 bis 120°C, in Gegegenwart von geeigneten Katalysatoren einer Carbodiimidisierungsreaktion unterworfen.

Geeignete Carbodiimidisierungskatalysatoren sind beispielsweise organische Phosphorverbindungen wie Phosphinoxide, Phospholine, Phospholinoxide, Phospholinsulfide, Phospholidinoxide oder metallorganische Verbindungen wie Phenyllithium und Diethylzink. Besonders bevorzugt wird ein technisches Gemisch aus 1-Methyl-1-phospha-2- und 1-Methyl-1-phospha-3-cyclopenten-1-oxid eingesetzt.

Die Dimerisierungskatalysatoren gelangen im allgemeinen in Mengen von 0,01 bis 2,5, vorzugsweise 0,05 bis 0,5 Gewichtsprozent, bezogen auf teilblockiertes Polyisocyanat zum Einsatz.

Auch die Carbodiimidisierungsreaktion kann gewünschtenfalls in Gegenwart geeigneter, vorzugsweise inerter Lösungsmittel durchgeführt werden. Geeignete Lösungsmittel, die sowohl in der ersten Reaktionsstufe als auch in der zweiten Reaktionsstufe des erfindungsgemäßen Verfahrens eingesetzt werden können, sind beispielsweise (Halogen)-Kohlenwasserstoffe, Ketone, Ester, Lactone, Ether, Sulfoxide, Sulfone, Amide, beispielsweise Dichlormethan, Tetrachlormethan, Tetrachlorethan, Trichlorethylen, Xylole, o-Dichlorbenzol, Benzoesäurealkylester, Phthalsäuredimethylester, γ-Butyrolacton, C-Caprolacton, Acetophenon, Cyclohexanon, Glykolmonomethyletheracetat, Glykolmonoethyletheracetat, 1-Methoxypropyl-2-acetat, Diethylenglykoldimethylether, Dimethylformamid, N-Methylpyrrolidon, Dimethylsulfoxid, Tetramethylensulfon, Methylcaprolactam und deren Gemische. Im zweiten Reaktionsschritt können auch solche Lösungsmittel mitverwendet werden, die gegenüber Isocyanatgruppen nicht vollständig inert sind, sondern eine gewisse Tendenz zur Bildung von Additionsverbindungen aufweisen, da die Carbodiimidisierungsreaktion unter den genannten Reaktionsbedingungen im allgemeinen schneller abläuft als die Addition der freien Isocyanatgruppen an derartige Lösungsmittel. Zu diesen Lösungsmitteln gehören beispielsweise Diethylenglykolmonomethylether, Diethylenglykolmonoethylether oder C-Caprolactam. Im allgemeinen werden derartige Lösungsmittel jedoch nicht als Reaktionsmedium für die Carbodiimidisierungsreaktion eingesetzt.

In der Regel wird die Carbodiimidisierung so durchgeführt, daß man nahezu alle vorhandenen NCO-Gruppen umsetzt und man Produkte mit blockierten Isocyanat- und Carbodiimidgruppen erhält, die einen freien NCO-Gehalt von unter 1 Gew.-% aufweisen. Es kann jedoch auch vorteilhaft sein, die Carbodiimidisierung abzustoppen, bevor alle unblockierten Isocyanatgruppen reagiert haben, z. B. bei einem Carbodiimidisierungsgrad von mindestens 65 % (Carbodiimidisierungsgrad = Prozentsatz der freien Isocyanatgruppen des teilblockierten Polyisocyanats, der unter Carbodiimidisierung abreagiert hat); dies bedeutet, daß die Carbodiimidisierungsreaktion im allgemeinen so geführt wird, daß 65 bis 100 % der freien Isocyanatgruppen des teilblockierten Polyisocyanats unter Carbodiimidisierung abreagieren. Zum Abstoppen der Carbodiimidisierungsreaktion kommen die bekannten Katalysatorengifte in Betracht, wie sie beispielsweise in der DE-OS 2 537 685 beispielhaft genannt werden. So eignen sich beispielsweise Säurehalogenide wie Thionylchlorid, Sulfurylchlorid, Phosphoroxychlorid, Phosphortrichlorid, Acetylchlorid oder Benzoylchlorid oder Säuren wie Chlorwasserstoff oder Perfluorbutansulfonsäure als Katalysatorengifte für die besonders bevorzugt als Carbodiimidisierungskatalysatoren eingesetzten Phospholinoxide. Die Katalysatorengifte werden in der Regel in einer Menge eingesetzt, die der Menge des eingesetzten Carbodiimidisierungskatalysators mindestens äquivalent ist. Der jeweilige Carbodiimidisierungsgrad kann sehr leicht durch Messung der bei der Carbodiimidbildung entwickelten Kohlendioxidmenge oder durch

3

titrimetrische Bestimmungen des Gehalts an freien Isocyanatgruppen des Reaktionsgemisches verfolgt werden.

Falls die Carbodiimidisierungsreaktion vorzeitig abgebrochen wird, lagern sich die noch verbleibenden freien Isocyanatgruppen beim Abkühlen des Reaktionsgemischs unter Bildung von Uretonimingruppen an die Carbodiimidgruppen an. Die erfindungsgemäßen Verfahrensprodukte weisen daher (i) Carbodiimid- und/oder Uretonimingruppen und (ii) blockierte Isocyanatgruppen auf. Der Gehalt der erfindungsgemäßen Verfahrensprodukte an Carbodiimidgruppen (berechnet als -N$=$C$=$N-) liegt im allgemeinen bei 0 bis 25 Gew.-%, vorzugsweise bei 1 bis 20 Gew.-%, der Gehalt an Uretonimingruppen (berechnet als Struktureinheiten der Bruttoformel $C_2N_3O$) liegt im allgemeinen bei 0 bis 30 Gew.-%, vorzugsweise bei 0 bis 25 Gew.-%, wobei die Summe aus Carbodiimid- und Uretonimingruppen (formal berechnet als -N$=$C$=$N) im allgemeinen bei 0,5 bis 25 Gew.-%, vorzugsweise bei 1 bis 20 Gew.-%, liegt, und der Gehalt an blockierten Isocyanatgruppen (berechnet als NCO) liegt im allgemeinen bei 1 bis 25 Gew.-%, vorzugsweise bei 5 bis 22 Gew.-%.

Die erfindungsgemäßen Verfahrensprodukte stellen wertvolle Ausgangsmaterialien zur Herstellung von Kunststoffen nach dem Isocyanat-Polyadditionsverfahren dar. Der Begriff "Isocyanat-Polyadditionsverfahren" umfaßt hierbei sowohl echte Polyadditionsreaktionen, wie sie beispielsweise zwischen Isocyanat- und Hydroxylgruppen ablaufen, als auch Kondensationsreaktionen, wie sie beispielsweise zwischen Isocyanat- und Carboxylgruppen unter Amidbildung und Abspaltung von Kohlendioxid ablaufen. Die bevorzugte und erfindungsgemäße Verwendung der erfindungsgemäßen Verfahrensprodukte besteht in ihrem Einsatz als Polyisocyanat-Komponente bei der Herstellung von Drahtlackierungen.

Bevorzugte Reaktionspartner für die erfindungsgemäßen Verfahrensprodukte bei ihrer erfindungsgemäßen Verwendung sind demzufolge beliebige, mindestens zwei gegenüber Isocyanatgruppen reaktionsfähige Gruppen aufweisende organische Verbindungen der aus der Polyurethanchemie an sich bekannten Art, wobei unter "gegenüber Isocyanatgruppen reaktionsfähige Gruppen" alkoholische Hydroxylgruppen und/oder Carboxylgruppen zu verstehen sind.

Reaktionspartner für die erfindungsgemäßen Verfahrensprodukte bei ihrer erfindungsgemäßen Verwendung sind z. B.:

1) Niedermolekulare, mehrwertige Alkohole mit einem unter 400 liegenden Molekulargewicht und einer bei 2 bis 4 liegenden Hydroxylfunktionalität wie Ethylenglykol, 1,2- und 1,3-Propylenglykol, 1,4-, 1,3- oder 2,3-Butandiol, 1,6-Hexandiol, Neopentylglykol, 1,4-Bis(hydroxymethyl)-cyclohexan, Glycerin, Trimethylolpropan, 1,2,6-Hexantriol, Diethylenglykol, Triethylenglykol, Tetraethylenglykol, Dipropylenglykol, Pentaerythrit, N,N-,N''-Tris(2-hydroxyethyl)-isocyanurat, 2,2-Bis[4-(2-hydroxyethoxy)-phenyl]propan, 2,2-Bis[4-(2-hydroxypropoxy)-phenyl]propan, Adipinsäure-bis-ethylenglykolester oder Maleinsäure-bis-ethylenglykolester.

2) Polyhydroxylpolyester des Molekulargewichtsbereichs 400 bis 4 000, wie sie durch Umsetzung von mehrbasischen Carbonsäuren wie z. B. Adipinsäure, Phthalsäure, Tetrahydrophthalsäure, Hexahydrophthalsäure oder von deren Anhydriden mit überschüssigen Mengen an mehrwertigen Alkoholen der unter 1) beispielhaft genannten Art zugänglich sind.

3) Aliphatisch gebundene Hydroxylgruppen aufweisende Oligourethane des Molekulargewichtsbereichs 200 bis 2.000, wie sie durch Umsetzung der bereits unter 1) genannten, gegebenenfalls Ethergruppen aufweisende Alkandiole oder -triole mit unterschüssigen Mengen an Diisocyanaten der auch als erfindungsgemäße Ausgangsmaterialien geeigneten Art erhalten werden, und wie sie beispielsweise in DE-PS 1 644 794 oder in GB-PS 1 195 886 beschrieben sind.

4) Aliphatische, cycloaliphatische oder aromatische Polycarbonsäuren, bevorzugt Dicarbonsäuren mit einem Molgewicht unterhalb 400 wie z. B. Bernsteinsäure, Adipinsäure, Sebacinsäure, Phthalsäure, Terephthalsäure, Isophthalsäure, Tetrahydrophthalsäure, Hexahydrophthalsäure, Maleinsäure oder Fumarsäure.

5) Niedermolekulare polyfunktionelle Verbindungen, die gleichzeitig Carboxyl- und Hydroxylgruppen aufweisen. Beispielhaft seien 2,2-Bishydroxymethylpropionsäure oder Weinsäure genannt.

6) Freie Carboxylgruppen und gegebenenfalls Hydroxylgruppen aufweisende Polyester des Molekulargewichtsbereichs 400 bis 2.000, wie sie durch unvollständige Veresterung von mehrbasischen Carbonsäuren der unter 2) und 4) beispielhaft genannten Art mit niedermolekularen Polyhydroxylverbindungen der unter 1) genannten Art erhalten werden können, wobei die Polyhydroxylverbindungen sowohl im Über- als auch im Unterschuß als auch in äquivalenten Mengen, bezogen auf die Polycarbonsäuren zum Einsatz gelangen können.

Vorzugsweise werden bei der Herstellung der unter 2), 3) und 6) beispielhaft genannten höhermolekularen Verbindungen mit gegenüber Isocyanatgruppen reaktionsfähigen Gruppen di- und trifunktionelle Ausgangsmaterialien eingesetzt, so daß polyfunktionelle Verbindungen der beispielhaft genannten Art erhalten werden. Die angegebenen Molekulargewichte können aus der Hydroxyl- bzw. Carboxylfunktionalität und dem Gehalt an Hydroxyl- und Carboxylgruppen in an sich bekannter Weise errechnet werden.

Selbstverständlich können bei der erfindungsgemäßen Verwendung beliebige Gemische der beispielhaft genannten Verbindungen mit gegenüber Isocanatgruppen reaktionsfähigen Gruppen eingesetzt werden. Die unter 2), 3) und 6) genannten Reaktionspartner für die erfindungsgemäßen Verfahrensprodukte sind besonders bevorzugt. Neben den unter 1) bis 6) beispielhaft genannten Reaktionspartnern für die erfindungsgemäßen Verfahrensprodukte bei ihrer erfindungsgemäßen Verwendung können auch noch weitere, gegenüber Isocyanat- und/oder Carbodiimidgruppen reaktionsfähige Verbindungen mitverwendet werden, obwohl dies im allgemeinen nicht bevorzugt ist. In diesem Zusammenhang sind beispielsweise Aminogruppen aufweisende Verbindungen wie Hexamethylendiamin, Melamin, Melamin/Formaldehyd-Harze, Hydroxylgruppen aufweisende Epoxide, Imidester, Imidesteramide, Hydantoine oder Hydroxyl- und/oder Carboxylgruppen aufweisende Polyacrylatharze zu nennen.

Um eine gewisse Elastizität der bei der erfindungsgemäßen Verwendung erhaltenen Beschichtungen zu gewährleisten, ist es erforderlich, in die die Beschichtung bildenden Kunststoffe einen gewissen Anteil an hohermolekularen, linearen Segmenten einzubauen. Dies kann beispielsweise bereits bei der Herstellung der erfindungsgemäßen Verfahrensprodukte erfolgen, indem man für deren Herstellung Isocyanat-Prepolymere auf Basis von difunktionellen Aufbaukomponenten verwendet.

Der Einbau von elastifizierend wirkenden höhermolekularen linearen Segmenten kann jedoch auch, und diese Ausführungsform ist bevorzugt, über die bei der erfindungsgemäßen Verwendung eingesetzten Reaktionspartner mit gegenüber Isocyanatgruppen reaktionsfähigen Gruppen erfolgen.

Bei der erfindungsgemäßen Verwendung kommen die erfindungsgemäßen Verfahrensprodukte und die beispielhaft genannten Verbindungen mit gegenüber Isocyanatgruppen reaktionsfähigen Gruppen im allgemeinen in solchen Mengenverhältnissen zum Einsatz, daß das Verhältnis der Äquivalente A der erfindungsgemäßen Verfahrensprodukte zu den Äquivalenten B der gegenüber Isocyanatgruppen und/oder Carbodiimidgruppen reaktionsfähigen Gruppen bei 0,1 : 1 bis 20 : 1, vorzugsweise 0,5 : 1 bis 4 : 1 und besonders bevorzugt 0,8 : 1 bis 2,5 : 1 liegt, wobei die Äquivalente A sich aus der Summe der Äquivalente an blockierten Isocyanatgruppen, an Carbodiimidgruppen, sowie an Uretonimingruppen zusammensetzen, wobei die blockierten Isocyanatgruppen und Carbodiimidgruppen jeweils als monofunktionelle Gruppen und die Uretonimingruppen als difunktionelle Gruppen in die Rechnung eingehen, und wobei die Äquivalente B sich aus der Summe der gegenüber Isocyanat- und Carbodiimidgruppen reaktionsfähigen Gruppen zusammensetzen.

Die Verwendung von Uretonimingruppen aufweisenden erfindungsgemäßen Verfahrensprodukten empfiehlt sich insbesondere bei der Herstellung von verzinnbaren Drahtlackierungen, wobei als Reaktionspartner für die erfindungsgemäßen Verfahrensprodukte insbesondere Polyhydroxylverbindungen der beispielhaft genannten Art Verwendung finden. Zur Herstellung von nicht verzinnbaren, d. h. schmorbeständigen Drahtlackierungen können sowohl Uretonimingruppen aufweisende als auch Uretonimin freie erfindungsgemäße Verfahrensprodukte verwendet werden, wobei jedoch als Reaktionspartner vorzugsweise Carboxylgruppen (und gegebenenfalls Hydroxylgruppen) aufweisende Verbindungen der beispielhaft genannten Art Verwendung finden. Vor allem aber wird die hier erwünschte hohe Vernetzungsdichte durch Mitverwendung geeigneter Metallkatalysatoren, die die Anlagerung von Carboxylgruppen und gegebenenfalls auch von Hydroxylgruppen an Carbodiimidgruppen beschleunigen, sichergestellt. Im übrigen kann die Vernetzungsdichte auch durch die Temperatur während des Einbrennvorgangs und die Dauer der Temperatureinwirkung beeinflußt werden.

Außerdem können die Eigenschaften der bei der erfindungsgemäßen Verwendung erhaltenen "Kunststoffe", d. h. insbesondere der erfindungsgemäß erhältlichen Drahtlackierungen durch das zur Anwendung gelangende Äquivalentverhältnis beeinflußt werden. Ein Überschuß an Äquivalenten A gegenüber der Äquivalenten an gegenüber Isocyanatgruppen reaktionsfähigen Gruppen (= Äquivalente B) führt im allgemeinen zu einer Erhöhung der Härte der Kunststoffe, während umgekehrt eine Erhöhung der Äquivalente B gegenüber den Äquivalenten A zu einer Erhöhung der Flexibilität der Kunststoffe führt.

Für die erfindungsgemäße Verwendung werden die erfindungsgemäßen Verfahrensprodukte mit den beispielhaft genannten Reaktionspartnern in den dargelegten Mengenverhältnissen miteinander abgemischt, wobei die aus der Polyurethantechnologie und insbesondere aus der Polyurethanlacktechnologie üblichen Hilfs- und Zusatzmittel mitverwendet werden können.

Derartige Hilfsmittel sind beispielsweise Lösungsmittel, Katalysatoren für die Isocyanat-Polyadditionsreaktionen, Pigmente oder Füllstoffe.

Als Lösungsmittel kommen sowohl die bereits oben beispielhaft genannten Lacklösungsmittel in Betracht, wobei ergänzend auch 2-Butanon oder 4-Methyl-2-pentanon, Butylacetat und Cyclohexanol genannt seien, als auch solche wie sie insbesondere zur Herstellung und Applikation von Drahtlacken Verwendung finden, wie z. B. Phenol, Kresole und/oder Xylenole, wobei auch beliebige Gemische derartiger Lösungsmittel verwendet werden können. Für die Drahtlackierung werden vorzugsweise 15- bis 75-, insbesondere 20- bis 60-gew.-%-ige Lösungen der bei der erfindungsgemäßen Verwendung einzusetzenden Bindemittelkomponenten verwendet.

Die bei der Aushärtung der erfindungsgemäßen Reaktionsgemische aus erfindungsgemäßen Verfahrensprodukten und Verbindungen mit gegenüber Isocyanatgruppen reaktionsfähigen Gruppen zur Anwendung kommenden Temperaturen, insbesondere die in den üblichen Einbrennöfen für Drahtlacke vorherrschenden Temperaturen reichen im allgemeinen aus, um die Additionsreaktion zwischen Isocyanatgruppen und Hydroxyl- und/oder Carboxylgruppen ausreichend rasch ablaufen zu lassen. Jedoch können diese Umsetzungen auch durch Zugabe an sich bekannter Katalysatoren beschleunigt werden. Als Katalysatoren für die Polyurethanbildungsreaktion und auch die zwischen Isocyanat- und Carboxylgruppen stattfindende Kondensationsreaktion eignen sich beispielsweise die in DE-AS 2 626 175, Kolonne 7, Zeile 35 bis Kolonne 8, Zeile 27 beschriebenen Verbindungen. Gut geeignet sind auch Umsetzungsprodukte von Aminen mit Carbonylverbindungen beispielsweise Aldimine auf Basis aliphatischer Aldehyde wie z. B. Butyraldehyd und aromatischer Amine wie z. B. Anilin.

Für die Beschleunigung der zwischen Carboxyl- und gegebenenfalls auch Hydroxylgruppen einerseits und Carbodiimidgruppen andererseits ablaufenden Anlagerungsreaktionen eignen sich insbesondere organische Metallkatalysatoren, insbesondere organische Titan-, Zink- oder Zinnverbindungen wie Tetraisopropyltitanat,

5

Zinkoctoat, Dibutylzinnoxid oder Dibutylzinndilaurat.

Die Katalysatoren werden, falls überhaupt, in einer Menge von 0,01 bis 5,0, vorzugsweise 0,1 bis 3,0 Gew.-%, bezogen auf die erfindungsgemäßen Verfahrensprodukte, ohne Einbeziehung der Verbindungen mit aktiven Wasserstoffatomen, eingesetzt.

Die durch Abmischung bei Raumtemperatur aus den genannten erfindungswesentlichen Komponenten bzw. Hilfs- und Zusatzmitteln erhaltenen Gemische sind bei Raumtemperatur oder mäßig erhöhter Temperatur (bis ca. 50°C) lagerbeständig und reagieren beim Erhitzen auf Temperaturen von oberhalb 80°C, vorzugsweise von 180 bis 700°C und insbesondere von 200 bis 500°C unter gleichzeitigem Verdampfen der gegebenenfalls vorliegenden flüchtigen Bestandteile (z. B. Lösungsmittel) zu vernetzten Kunststoffen aus.

Bei Verwendung von flüssigen oder niedrig schmelzenden Bindemittelkomponenten ist eine Verarbeitung der Beschichtungsmittel auch aus der Schmelze möglich.

Bei der Drahtlackierung erfolgt die Beschichtung der Drähte nach den an sich bekannten Tauch-, Rollenauftrags- oder Saugfilzverfahren, worauf sich die Trocknung, d.h. die Aushärtung der Lackschichten in den üblichen Trockenöfen innerhalb der genannten Temperaturbereiche anschließt. Aufgrund der Verwendung der erfindungsgemäßen Verfahrensprodukte als Vernetzer für die Drahtlacke sind hierbei besonders hohe Lackiergeschwindigkeiten, d. h. besonders kurze Trocknungszeiten möglich.

In den nachfolgenden Beispielen beziehen sich alle Prozentangaben auf Gewichtsprozente. Die Gehalte an blockierten NCO-Gruppen wurden als "NCO", d. h. unter Zugrundelegung eines Molekulargewichts von 42 berechnet.

**Beispiel 1**

a) Herstellung:

Zu 5.000 g 4,4'-Diisocyanatodiphenylmethan werden innerhalb von 2 h bei 80°C 2.160 g Kresol zugetropft, und man läßt bei 120°C reagieren, nach ca. 4 h wird ein NCO-Gehalt von 11,8 % erreicht ($NCO_{theor.}$ = 11,7 %), und man verdünnt durch Zugabe von 3.070 g Glykolmonomethyletheracetat zu einer 70 %-igen Lösung mit einem NCO-Gehalt von 8,3 % ($NCO_{theor.}$ = 8,2 %).

Durch Zugabe von 20 g (0,2 %) Methylphospholinoxid (einem technischen Gemisch aus 1-Methyl-1-phospha-2-cyclopenten-1-oxid und 1-Methyl-1-phospha-3-cyclopenten-1-oxid) wird die Carbodiimidbildung bei 60°C katalysiert und durch Messung der $CO_2$-Entwicklung verfolgt. Nach ca. 12 h kommt die Gasentwicklung bei 220 l $CO_2$ (>90 % der theoretisch maximal zu erwartenden Menge) zum Stillstand. Die berechneten Umsätze bezogen auf die $CO_2$-Entwicklung und die Abnahme des NCO-Gehalts verlaufen parallel.

Man erhält die Lösung eines blockierten Isocyanats mit folgenden Kenndaten:

| | |
|---|---|
| Konzentration: | ca. 70 %-ig |
| Viskosität: | $\eta$ (23°C) = 6.000 mPas |
| freier NCO-Gehalt: | <0,1 % |
| blockierter NCO-Gehalt: | 8,5 % (Analysenmethode: 30 min/180°C mit Di-n-butyl-amin in o-Dichlorbenzol) |
| blockierter NCO-Gehalt (berechnet) | 8,5 % |
| IR: | 2.110, 2.140 cm$^{-1}$ (Carbodiimid) |
| Carbodiimid-Gehalt (NCN) (berechnet aus $CO_2$-Menge): | 3,1 % |
| Uretonimin-Gehalt ($C_2N_3O$) (berechnet aus $CO_2$-Menge): | 1,3 % |

b) Anwendung:

100 Gew.-Teile eines Hydroxyurethans der OH-Zahl 190 aus 26,5 % 1,6-Hexandiol, 21,0 % Trimethylolpropan, 1,8 % ε-Caprolactam und 50,7 % Diisocyanatotoluol (2,4- und 2,6-Isomeren im Gewichtsverhältnis 8 : 2) werden in einer Mischung aus 310 Gew.-Teilen Kresol und 305 Gew.-Teilen Xylol unter Rückfluß bei Temperaturen bis 130°C gelöst. Die erkaltete Lösung wird mit 285 Gew.-Teilen der wie beschrieben hergestellten 70 %-igen Lösung des blockierten Isocyanats vermischt, anschließend werden der so erhaltenen Lackmischung 1 %, bezogen auf den Feststoffgehalt des Lacks, Aldimin auf Basis von Butyraldehyd und Anilin zugegeben.

Auf einer vertikalen Drahtlackieranlage (in Analogie zu der in US-PS 3 397 253, Kolonne 7, Zeilen 38 - 65 beschriebenen Anlage) mit einem Ofen von 4 m Länge wird ein Kupferdraht von 0,7 mm Durchmesser mittels Filzabstreifern in 6 Durchzügen auf eine Durchmesserzunahme von 50 μm lackiert. Bei einer Ofentemperatur von 350°C kann der Draht mit einer Geschwindigkeit bis 20 m/min lackiert werden, ohne daß bei späterem Dehnen des Cu-Drahtes bis zum Bruch (ca. 40 % Dehnung) der Lackfilm Risse zeigt.

Bei Verwendung eines herkömmlichen, handelsüblichen Lacksystems, das sich lediglich bezüglich der Natur des Härters von dem beschriebenen erfindungsgemäßen Lacksystem unterscheidet (es wurde eine äquivalente Menge eines blockierten Polyisocyanats, bestehend aus dem Umsetzungsprodukt von 55,6 % Diisocyanatotoluol (2,4- und 2,6-Isomere im Gewichtsverhältnis 8 : 2), 14,3 % Trimethylolpropan und 30,1 % Phenol verwendet) kann lediglich bis zu einer Geschwindigkeit von 12 m/min lackiert werden.

Beide Lackierungen sind bei einer Verzinnungstemperatur von 370°C innerhalb von 3 bis 4 Sekunden verzinnbar.

**Beispiel 2**

a) Herstellung:
4.350 g eines Gemischs aus 2,4-Diisocyanatotoluol und 2,6-diisocyanatotoluol (Gewichtsverhältnis = 8 : 2) werden innerhalb 1 h bei 60°C mit 2.700 g Kresol versetzt. Man läßt ca. 5 h bei 80 bis 100°C reagieren und verdünnt nach Erreichen eines NCO-Gehalts von 14,9 % ($NCO_{theor.}$ = 14,9 %) mit 3.020 g Glykolmonomethyletheracetat.

Die 70 %-ige Lösung mit einem NCO-Gehalt von 10,4 % ($NCO_{theor.}$ = 10,4 %) wird mit 25 g Methylpospholinoxid (einem technischen Gemisch aus 1-Methyl-1-phospha-2-cyclopenten-1-oxid und 1-Methyl-1-phospha-3-cyclopenten-1-oxid) bei 60°C katalysiert. Die Carbodiimidisierung läßt sich anhand der gemessenen $CO_2$-Menge verfolgen und ist nach ca. 20 h beendet (280 l $C^\circ_2$).

Die Lösung des blockierten Isocyanats hat folgende Kenndaten:

| | |
|---|---|
| Konzentration: | ca. 70 %-ig |
| Viskosität: | $\eta$ (23°C) = 1.500 mPas |
| freier NCO-Gehalt: | 0,1 % |
| blockierter NCO-Gehalt (berechnet): | 11,0 % |
| IR: | 2.140 cm$^{-1}$ (Carbodiimid) |
| Carbodiimid-Gehalt (berechnet aus $CO_2$-Menge): | 4,2 % |
| Uretonimin-Gehalt (berechnet aus $CO_2$-Menge): | 1,4 % |

b) Anwendung:
150 Gew.-Teile des Hydroxyurethans entsprechend Beispiel 1 werden in einem Lösungsmittelgemisch aus 304 Gew.-Teilen Kresol und 300 Gew.-Teilen Xylol unter Rühren bei Temperaturen bis 130°C gelöst. Zur erkalteten Lösung werden 245 Gew.-Teile der wie beschrieben hergestellten 70 %-igen Lösung zugegeben. Abschließend gibt man, bezogen auf den Feststoffgehalt, 1,5 % des Aldimins gemäß Beispiel 1 hinzu.

Beim Drahtlackierungsversuch analog Beispiel 1 kann bis zu einer Geschwindigkeit von 22 m/min lackiert werden, bevor der Lackfilm beim Dehnen des Cu-Drahtes Risse zeigt.

**Beispiel 3**

a) Herstellung:
Eine Mischung aus 2.500 g 4,4'-Diisocyanatodiphenylmethan und 1.740 g 2,4-Diisocyanatotoluol und 2,6-Diisocyanatotoluol (Gewichtsverhältnis = 8 : 2) wird innerhalb 1 h bei 80°C mit 2.160 g Kresol versetzt und ca. 4 h bei 100 bis 120°C reagieren gelassen. Nach Erreichen eines NCO-Gehalts von 13,2 % ($NCO_{theor}$ = 13,1 %) wird mit 2.740 g Glykolmonomethyletheracetat verdünnt.

Man katalysiert die Carbodiimidbildung durch Zugabe von 20 g Methylpospholinoxid (einem technischen Gemisch aus 1-Methyl-1-phospha-2-cyclopenten-1-oxid und 1-Methyl-1-phospha-3-cyclopenten-1-oxid) bei 60°C. Nach ca. 15 h erreicht die $CO_2$-Entwicklung einen Endwert bei 210 l (ca. 90 %).

Man erhält die Lösung eines blockierten Isocyanats mit folgenden Kenngrößen:

7

EP 0 231 509 B1

| | |
|---|---|
| Konzentration: | ca. 70 %-ig |
| Viskosität: | $\eta$ (23°C) = 4.600 mPas |
| freier NCO-Gehalt: | <0,1 % |
| blockierter NCO-Gehalt (berechnet): | 9,6 % |
| IR: | 2.140 cm$^{-1}$ (Carbodiimid) |
| Carbodiimid-Gehalt (berechnet aus CO$_2$-Menge): | 2,9 % |
| Uretonimin-Gehalt (berechnet aus CO$_2$-Menge): | 2,2 % |

b) Anwendung:

643 Gew.-Teile der wie beschrieben hergestellten 70 %-igen Lösung des blockierten Isocyanats werden mit 571 Gew.-Teilen Kresol und 286 Gew.-Teilen Xylol (Kresol/Xylol = 2 : 1) zu einer 30 % Festkörper enthaltenden Lösung verdünnt.

Zu diesen 1.500 Gew.-Teilen werden 1.000 Gew.-Teile einer 30 %-igen in Kresol/Xylol = 2 : 1 gelösten Lösung eines Polyesters zugegeben, der aus 63,5 % Terephthalsäure, 14,1 % Glycerin, 21,3 % Ethylenglykol und 1,1 % Adipinsäure hergestellt wurde und einen OH-Gehalt von 5 % und einen Carboxylgehalt von 0,4 % aufweist. Man setzt abschließend berechnet auf den Festgehalt der Lösung 1 % einer Zinkoctoat-lösung mit einem Zn-Gehalt von 8 % zu.

Wie unter Beispiel 1 beschrieben wird mit dieser Lösung ein Draht von 0,7 mm auf eine Schichtdickenzunahme von ca. 50 µm lackiert. Auch in diesem Falle sind Lackiergeschwindigkeiten bis 20 m/min möglich. Der erhaltene Draht kann um den eigenen Durchmesser gewickelt werden und anschließend 30 min einer Temperatur von 180°C ausgesetzt werden, ohne daß Filmrisse entstehen. In diesem Fall ist aber eine Verzinnbarkeit bei 370°C nicht mehr gegeben.

**Beispiel 4**

a) Herstellung:

2.500 g 4,4'-Diisocyanatodiphenylmethan werden innerhalb ca. 10 h mit 864 g Kresol bis zu einem NCO-Gehalt von 15,2 % (NCO$_{theor.}$ = 15,0 %) blockiert. Man gibt 1.440 g Glykolmonomethyletheracetat zu (70 %-ige Lösung, NCO = 10,3 %) und katalysiert bei 40°C mit 12 g Methylphospholinoxid (einem technischen Gemisch aus 1-Methyl-1-phospha-2-cyclopenten-1-oxid und 1-Methyl-1-phospha-3-cyclopenten-1-oxid). Nach 1 h bei 60°C wird ein Umsatz der Carbodiimidbildung von ca. 75 % erreicht - NCO-Gehalt = 3,0 %; 110 l C°$_2$ (maximale theoretische CO$_2$-Menge = 144 l) - und man stoppt durch Zugabe von 36 g Perfluorbutansulfonsäure, die in Dimethylformamid im Verhältnis 1 : 3 gelöst ist, ab.

Man rührt 12 h bei 60°C nach, bis die Lösung Isocyanatgruppen-frei ist und erhält ein Produkt mit folgenden Kenndaten:

| | |
|---|---|
| Konzentration: | ca. 70 %-ig |
| Viskosität: | $\eta$ (23°C) = 8.50 mPas |
| freier NCO-Gehalt: | <0,1 % |
| blockierter NCO-Gehalt: | 6,9 % (Analysenmethode: 30 min/180°C mit Di-n-butylamin in o-Di-chlorbenzol) |
| blockierter NCO-Gehalt (berechnet): | 7,3 % |
| IR: | 2.100 cm$^{-1}$ (Carbodiimid) |
| Carbodiimid-Gehalt (berechnet aus CO$_2$-Menge): | 1,6 % |
| Uretonimin-Gehalt (berechnet aus CO$_2$-Menge): | 5,0 % |

b) Anwendung:

1.000 Gew.-Teile eines Hydroxyurethans entsprechend Beispiel 1 mit einem OH-Gehalt von 6 % werden in

8

4.238 Gew.-Teilen Kresol unter Erwärmen bis maximal 130°C gelöst und nach dem Erkalten mit 1.429 Gew.-Teilen des wie unter a) beschrieben hergestellten Produkts vereinigt. Berechnet auf den Festgehalt werden 1,5 % des Aldimins gemäß Beispiel 1 zugegeben.

Mit dieser Lösung wird ein Cu-Draht von 0,7 mm Durchmesser auf einer Drahtlackieranlage mit katalytischer Verbrennung der Lösemittel und Düsenabstreifer auf eine Durchmesserzunahne von 50 μm lackiert. Als Drahtlackieranlage wurde eine Anlage VE 5 der Firma Maschinen- und Apparatebau, Graz, Österreich verwendet.

Lackierbedingungen:

| | |
|---|---|
| Ofenlänge: | 5 m |
| mittlere Ofentemperatur: | 500°C |
| Anzahl der Passagen: | 8 |

Die Lackiergeschwindigkeit kann bis auf 115 m/min gesteigert werden, ohne daß der Lackfilm beim Dehnen des Cu-Drahtes bis zum Bruch Risse zeigt.

Der bei einer Abzugsgechwindigkeit von 100 m/min hergestellte Lackdraht kann bei einer Lötbadtemperatur von 370°C innerhalb von 3 Sekunden verzinnt werden.

Kombiniert man hingegen das gleiche Hydroxyurethan mit einer äquivalenten Menge des in Beispiel 1 erwähnten handelsüblichen, blockierten Polyisocyanats, ist bei gleichen Einbrennbedingungen nur eine Lackiergeschwindigkeit bis 80 m/min möglich.

**Beispiel 5**

325 Gew.-Teile eines Polyesters, der aus 66,2 % Adipinsäure, 29,5 % Ethylenglykol und 4,3 % Trimethylolpropan hergestellt wurde und einen OH-Gruppen-Gehalt von ca. 1,8 % aufweist, werden in einem Lösungsmittelgemisch aus 70 Gew.-Teilen Cyclohexanon, 143 Gew.-Teilen Methylethylketon und 200 Gew.-Teilen Xylol unter Rückfluß bei einer Temperatur bis 130°C gelöst und nach dem Erkalten mit 272 Gew.-Teilen der nach Beispiel 1 a) hergestellten Lösung des blockierten Carbodiimidstrukturen enthaltenden Isocyanats versetzt. Vor der Verarbeitung des Lackes werden 2,5 Gew.-Teile eines handelsüblichen Polyetherpolysiloxans als Verlaufshilfsmittel ((R)Baysilon-Lackadditiv OL 17 der Firma Bayer AG, Leverkusen) und 2,5 Gew.-Teile Zinkoctoat mit 8 % Zink zugesetzt.

Mit dieser Lösung werden Glasseidenschläuche imprägniert. Dazu werden 6 Tauchungen durchgeführt. Nach jeweiligem Abtropfen des Lacküberschusses und 10-minütigem Ablüften des Großteils der Lösemittel werden die Aufträge 1 bis 5 10 min, der 6. Auftrag 60 min bei 140°C eingebrannt. Man erhält sehr flexible Isolierschläuche. Die Durchschlagsspannung, gemessen entsprechend DIN 40 620, beträgt durchschnittlich 7 kV.

Der Gewichtsverlust bei 175°C beträgt nach 4 Wochen 13,8 %.

**Beispiel 6**

a) Herstellung:

Zu 5.000 g 4,4'-Diisocyanatodiphenylmethan werden innerhalb 1 h bei 60°C 2.160 g Kresol zugetropft. Man läßt 3 h bei 140°C reagieren bis zu einem NCO-Gehalt von 10,8 % ($NCO_{theor.}$ = 11,7 %) und verdünnt durch Zugabe von 5 000 g Glykolmonomethyletheracetat zu einer 59 %-igen Lösung mit einem NCO-Gehalt von 5,7 % ($NCO_{theor.}$ = 6,9 %).

Man katalysiert bei 40°C mit 20 g (0,16 %) Methylphospholinoxid (einem technischen Gemisch aus 1-Methyl-1-phospha-2-cyclopenten-1-oxid und 1-Methyl-1-phospha-3-cyclopenten-1-oxid) und läßt 6 h bei 60°C reagieren, bis sich 180 l $CO_2$ gebildet haben und bis zu einem freien NCO-Gehalt < 0,1 %.

Man erhält die Lösung eines blockierten Isocyanats mit folgenden Kenndaten:

9

| Konzentration: | ca. 59 %-ig |
| Viskosität: | $\eta$ (23° C) = 650 mPas |
| blockierter NCO-Gehalt (berechnet): | 7,1 % |
| IR: | 2.110, 2.140 cm$^{-1}$ (Carbodiimid) |
| Carbodiimidgehalt (berechnet aus $CO_2$-Menge): | 2,0 % |
| Uretonimin-Gehalt (berechnet aus $CO_2$-Menge): | 1,0 % |

b) Anwendung:

150 Gew.-Teile Tris(2-hydroxyethyl)isocyanurat werden bei einer Temperatur von ca. 55°C in 426 Gew.-Teilen N-Methylpyrrolidon gelöst und nach dem Erkalten mit 424 Gew.-Teilen der wie beschrieben hergestellten 59 %-igen Lösung des blockierten Isocyanats vereinigt. Berechnet auf den Festgehalt der Lösung wird 1 % des Aldimins gemäß Beispiel 1 zugesetzt.

Die so erhaltene Lacklösung wird durch Tauchen auf ein Tiefziehblech aufgebracht. Nach dem Ablüften der Hauptmenge der Lösemittel bei Raumtemperatur wird im Ofen während 1 h bei 200°C eingebrannt. Man erhält einen elastischen Film von guter Oberflächenhärte und guter Lösemittelbeständigkeit gegenüber warmem Ethanol.

**Patentansprüche**

1. Verfahren zur Herstellung von (i) Carbodiimid- und/oder Uretonimingruppen und (ii) blockierte Isocyanatgruppen aufweisenden, organischen Verbindungen, dadurch gekennzeichnet, daß man die Isocyanatgruppen eines organischen Polyisocyanats eines Molekulargewichts von 174 - 1 000 mit ausschließlich aromatisch gebundenen Isocyanatgruppen zu 30 - 70 % durch Reaktion mit einem monofunktionellem Blockierungsmittel für Isocyanatgruppen blockiert und anschließend die noch verbleibenden freien Isocyanatgruppen zu 65 bis 100 % unter Kohlendioxidabspaltung in Carbodiimidgruppen überführt.

2. Verwendung der gemäß Anspruch 1 erhältlichen, (i) Carbodiimid- und/oder Uretonimingruppen und (ii) blockierte Isocyanatgruppen aufweisenden Verbindungen in Kombination mit gegenüber Isocyanatgruppen reaktionsfähigen Gruppen zur Herstellung von Drahtlackierungen.

**Claims**

1. A process for the production of organic compounds containing (i) carbodiimide and/or uretone imine groups and (ii) blocked isocyanate groups, characterized in that from 30 to 70 % of the isocyanate groups of an organic polyisocyanate having a molecular weight of 174 to 1 000 and containing only aromatically bound isocyanate groups are blocked by reaction with a monofunctional blocking agent for isocyanate groups, after which from 65 to 100 % of the free isocyanate groups still remaining are converted into carbodiimide groups with elimination of carbon dioxide.

2. The use of the compounds containing (i) carbodiimide and/or uretone imine groups and (ii) blocked isocyanate groups obtainable in accordance with claim 1 in combination with isocyanate-reactive groups for the production of wire lacquers.

**Revendications**

1. Procédé de production de composés organiques présentant (i) des groupes carbodiimide et/ou urétonimine et (ii) des groupes isocyanato protégés, caractérisé en ce qu'on protège les groupes isocyanato d'un polyisocyanate organique de poids moléculaire compris entre 174 et 1 000 avec des groupes isocyanato en liaison exclusivement aromatique, à 30 - 70 % par réaction avec un agent monofonctionnel de protection de groupes isocyanato, puis on transforme les groupes isocyanato restés libres à 65 - 100 % en groupes carbodiimide avec élimination d'anhydride carbonique.

2. Utilisation des composés porteurs (i) de groupes carbodiimide et/ou urétonimine et (ii) de groupes isocyanato protégés, pouvant être obtenus suivant la revendication 1, en association avec des groupes aptes à réagir vis-à-vis de groupes isocyanato pour la production de revêtements de vernis sur des fils métalliques.